Europäisches Patentamt

European Patent Office

Office européen des brevets

(19)

(11) **EP 1 231 079 B1**

(12) **EUROPEAN PATENT SPECIFICATION**

(45) Date of publication and mention
of the grant of the patent:
**28.07.2004 Bulletin 2004/31**

(51) Int Cl.7: **B60C 1/00**, C08C 19/36,
C08L 13/00, C08K 5/15,
C08K 3/24

(21) Application number: **01102664.8**

(22) Date of filing: **07.02.2001**

(54) **Process for producing tyres, tyres thus obtained and elastomeric composition used therin**

Verfahrung zur Herstellung von Reifen, Elastomerzusammensetzungen und Reifen

Procédé de préparation de pneumatiques, compositions élastomériques et pneumatiques

(84) Designated Contracting States:
**AT BE CH CY DE DK ES FI FR GB GR IE IT LI LU
MC NL PT SE TR**

(43) Date of publication of application:
**14.08.2002 Bulletin 2002/33**

(73) Proprietor: **PIRELLI PNEUMATICI Società per
Azioni
20126 Milano (IT)**

(72) Inventors:
• **Nahmias Nanni, Marco
20121 Milano (IT)**

• **Serra, antonio
16138 Genova (IT)**

(74) Representative: **Giannesi, Pier Giovanni et al
Pirelli S.p.A.
Industrial Property Dept.
Viale Sarca, 222
20126 Milano (IT)**

(56) References cited:
**DE-A- 2 140 949      IT-B- 1 245 551
US-A- 3 910 866**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 231 079 B1

**Description**

The present invention relates to a process for producing tyres for vehicle wheels, to the tyres thus obtained and to the crosslinkable elastomeric compositions used therein. More particularly, the present invention relates to a process for producing tyres for vehicle wheels, which can be carried out in substantial absence of conventional crosslinking agents, to the tyres thus obtained and to the crosslinkable compositions used therein.

Processes for vulcanizing diene elastomers with sulphur are widely used in the rubber industry for the production of a wide range of products, and in particular tyres for vehicle wheels. Implementation of these processes, although giving high-quality vulcanized products, shows a considerable complexity, mainly due to the fact that, to obtain optimum vulcanization within industrially acceptable times, it is necessary to use a complex vulcanizing system which includes, besides sulphur or sulphur-donating compounds, one or more activators (for example stearic acid, zinc oxide and the like) and one or more accelerators (for example thiazoles, dithiocarbamates, thiurams, guanidines, sulphenamides and the like). The presence of these products can, in some cases, entail considerable problems in terms of harmfulness/toxicity both during production and during use, in particular when the vulcanized products are intended for medical/health-care or food use. In addition, it is known that the use of sulphur or sulphur-donating compounds leads, during the vulcanization step which is generally carried out at temperatures above 150°C, to development of volatile sulphur-containing compounds.

Consequently, in recent years, research efforts have been directed along two different lines, the first being to improve the known vulcanization processes to make them more efficient and cleaner, the second aimed at developing alternative crosslinking techniques. Although appreciable progress has been made, it is not possible to state at the present time that alternative techniques to crosslinking with sulphur exist which would give similar results and would simultaneously afford an effective simplification in terms of production. For example, crosslinking processes via peroxide compounds require special precautions on account of the instability of these compounds, in addition to requiring the use of activators. Crosslinking by means of radiation involves use of complex equipment, as well as incorporation of all the precautions required when high-energy and high-power radiation is used.

So-called "self-crosslinking" elastomeric compositions, i.e. compositions which do not require the use of crosslinking agents such as sulphur or sulphur compounds, are known in the art.

For example, US patent 2,724,707 describes elastomeric compositions consisting of a diene polymer containing carboxylic groups, in particular a carboxylated nitrile rubber (XNBR) obtained by partial hydrolysis of a butadiene/acrylonitrile copolymer, wherein a polyhydric metal oxide (for example zinc oxide) is dispersed. On heating these compositions, they crosslink according to a mechanism of ionic type.

A study on crosslinking of XNBR having a high carboxylation degree by reaction with an epoxy resin (for example bisphenol A diglycidyl ether) in the presence of reinforcing fillers such as carbon black, silica and clay, is reported in the article by S.K. Chakraborty and S.K. De, published in the *Journal of Applied Polymer Science,* Vol. 27, pp. 4561-4576 (1982). The crosslinking is carried out by heating the rubber compound to 150°-180°C. As known, epoxy resins are low molecular weight products wherein the epoxide (or oxirane) groups are "external", i.e. they are located in a terminal position on the main hydrocarbon chain, the oxygen atom forming the oxirane ring being linked to the last and the penultimate carbon atom of this chain.

A study of the crosslinking of a composition based on epoxidized natural rubber (ENR) and XNBR is reported in the article by R. Alex, P.P. De, N.M. Mathew and S.K. De, published in *Plastics and Rubber Processing and Applications,* Vol. 14, No. 4, 1990. In particular, this article describes the crosslinking of compositions consisting of ENR and XNBR as such or containing silica or carbon black as reinforcing filler. According to what reported by the authors, in the mixtures of ENR and XNBR the crosslinking reaction implies the formation of ester bonds between the epoxide groups and carboxylic groups. The rheometric curves would show absence of reversion, stability of the crosslinked structure and a high crosslinking degree.

Italian patent IT-1,245,551 describes self-crosslinking compositions containing an epoxidized elastomer and a crosslinking agent of formula R1-R-R2, wherein R is an arylene, alkylene or alkenylene group, while R1 and R2 are carboxylic, amine, sulphonic or chlorosulphonic groups. Dicarboxylic or polycarboxylic acids, or mixtures thereof, can be used as crosslinking agents. Self-crosslinking compositions containing an epoxidized elastomer and a second elastomer wherein the repeating units of the polymer chain contain at least one carboxylic group are also described. For example, self-crosslinking compositions are obtained by mixing an epoxidized elastomer (for example the products ENR 25 or ENR 50 which are available under the brand name Epoxiprene® from Guthrie Symington Ltd) with a butadiene/acrylic acid copolymer (for example a product sold by Polysar/Bayer under the brand name Krynac®). The crosslinking reaction takes place by heating between the epoxide groups and the carboxylic groups, with formation of ester bonds.

US patent 3,910,866 discloses acrylate rubbers having halogen and carboxyl cure sites and being submitted to crosslinking by using metal oxide compounds of iron, tin a copper as curative agents together with a quaternary ammonium salt as cure accelerator.

Patent DE-2,140,949 describes a rubber composition for tires containing a polybutadiene having carboxyl groups, epoxycyclohexyl methylester as an epoxidised compound and an anhydride compound. The vulcanisation of the composition is carried out without any sulfur down compounds or any radical initiator. The curing step may be accelerated by addition of metal salt of organic compound.

US patent 5,173,557 describes self-crosslinking compositions comprising an elastomeric polymer functionalized with isocyanate groups and a compound containing at least two active hydrogen atoms of Zerewitinoff type, or self-crosslinking compositions comprising an elastomeric polymer containing active hydrogen atoms of Zerewitinoff type and a compound containing at least two isocyanate groups. Alternatively, an elastomeric polymer containing either isocyanate groups or active hydrogens of Zerewitinoff type can be used, without using an additional crosslinking agent. The active hydrogen atoms can be present, for example, on hydroxide, amine, carboxylic or thiol groups. To avoid undesired pre-crosslinking of the elastomer, the isocyanate groups are blocked beforehand with suitable functional groups, which are removed by heating before the crosslinking reaction between the free isocyanate groups and the active hydrogens, optionally with the aid of a catalyst.

On the basis of the Applicant's experience, the self-crosslinking compositions proposed hitherto in the prior art do not provide a valid alternative to conventional compositions vulcanized with sulphur or derivatives thereof. The reason for this is that the performance qualities of the crosslinked products are generally unsatisfactory, in particular for applications such as tyre rubber compounds, wherein a substantial constancy of the elastic performance qualities over a wide range of working temperatures and at the same time high abrasion resistance without unacceptably increasing hardness is required. This is the case, for example, for the self-crosslinking compositions described above wherein a polymer containing carboxylic groups (for example XNBR) is crosslinked by heating in admixture with an epoxidized elastomeric polymer or with an epoxy resin.

The Applicant has now found that crosslinked products, and in particular tyres for vehicle wheels, which have the desired combination of properties can be produced in the substantial absence of additional crosslinking agents, by using self-crosslinking compositions comprising a mixture of at least an elastomeric polymer containing carboxylic groups, at least a liquid organic compound containing epoxide groups located internally on the molecule, and at least an oxide or an inorganic salt of a metal selected from Fe, Cu, Sn, Mo and Ni.

After heating, these compositions achieve a high degree of crosslinking without addition of conventional crosslinking agents, with crosslinking times contained within limits which are acceptable for industrial use. The resulting crosslinked product combines excellent mechanical and elastic performance qualities (in particular stress at break, elongation at break) so as to make the self-crosslinking compositions above particularly suitable as elastomeric materials to be used for the production of tyres, in particular tread bands.

In addition, the use of liquid compounds containing internal epoxide groups makes it possible to obtain crosslinkable compositions which have excellent processability and a high capacity to include reinforcing fillers, even in the absence of compatibilizing, additives, since these epoxidized products act not only as crosslinking agents but also as processing coadjuvants and are capable of interacting with reinforcing fillers containing active hydroxyl groups (for example silica), thus favouring compatibilization with the polymer matrix.

According to a first aspect, the present invention thus relates to a process for producing tyres for vehicle wheels, the said process comprising the following steps:

manufacturing a green tyre comprising at least one crosslinkable elastomeric material;
subjecting the green tyre to moulding in a mould cavity defined in a vulcanization mould;
crosslinking the elastomeric material by heating the tyre to a predetermined temperature and for a predetermined time;

characterized in that the crosslinkable elastomeric material comprises: (a) at least an elastomeric polymer containing carboxylic groups, (b) at least an epoxidized liquid organic compound containing epoxide groups located internally on the molecule, and (c) at least an oxide or an inorganic salt of a metal selected from Fe, Cu, Sn, Mo and Ni, the said crosslinking step being carried out substantially in the absence of additional crosslinking agents.

According to a further preferred aspect, the crosslinking step is carried out by heating the crosslinkable elastomeric material to a temperature of at least 120°C for a time of at least 3 minutes, preferably to a temperature of from 130°C to 230°C for a time of from 5 to 90 minutes.

In accordance with a particularly preferred aspect, the said crosslinkable elastomeric material also comprises a reinforcing filler.

In a second aspect, the present invention relates to a tyre for vehicle wheels comprising one or more components made of a crosslinked elastomeric material, characterized in that at least one of the said components comprises, as crosslinked elastomeric material, at least an elastomeric polymer containing carboxylic groups crosslinked by reaction with at least an epoxidized liquid organic compound containing epoxide groups located internally on the molecule in the presence of at least an oxide or an inorganic salt of a metal selected from Fe, Cu, Sn, Mo and Ni, wherein the said carboxylated elastomeric polymer is crosslinked substantially in the absence of additional crosslinking agents.

According to a further aspect, the present invention relates to a tyre for vehicles, comprising a belt structure extended coaxially around a carcass structure and a tread band extended coaxially around the belt structure and having an external rolling surface intended to come into contact with the ground, characterized in that the said tread band comprises at least an elastomeric polymer containing carboxylic groups crosslinked by reaction with at least an epoxidized liquid organic compound containing epoxide groups located internally on the molecule in the presence of at least an oxide or an inorganic salt of a metal selected from Fe, Cu, Sn, Mo and Ni, wherein the said carboxylated elastomeric polymer is crosslinked substantially in the absence of additional crosslinking agents.

According to a further aspect, the present invention relates to a crosslinkable elastomeric composition comprising: (a) at least an elastomeric polymer containing carboxylic groups; (b) at least a liquid organic compound containing epoxide groups located internally on the molecule, and (c) at least an oxide or an inorganic salt of a metal selected from Fe, Cu, Sn, Mo and Ni; the said composition being crosslinkable in substantial absence of any additional crosslinking agents.

According to a further aspect, the present invention relates to a crosslinked elastomeric product obtained by crosslinking a crosslinkable composition as defined above.

For the purposes of the present description and the claims, the expression "in substantial absence of any additional crosslinking agents" means that the crosslinkable composition is not subjected to the action of other systems capable of bringing about its crosslinking, or that other products which may be present in the composition can in themselves participate in the crosslinking reaction, but are used in amounts less than the minimum amount required to obtain an appreciable degree of crosslinking in short times (for example within 5 minutes). In particular, the compositions according to the present invention are crosslinkable in substantial absence of any of the crosslinking systems commonly used in the art, such as, for example, sulphur or sulphur donors, peroxides or other radical initiators, and neither are these compositions subjected to the action of high-energy radiation (UV, gamma rays, etc.) so as to induce crosslinking phenomena in the polymer.

The liquid organic compounds containing epoxide groups located internally on the molecule (for simplicity, these are referred to hereinbelow as "organic compounds containing internal epoxide groups" or "epoxidized organic compounds") are products of hydrocarbon type which are, at room temperature, in the form of viscous liquids or oils.

These compounds contain at least two internal epoxide groups, i.e. groups wherein one oxirane bridge connects:

(i) two adjacent carbon atoms located on the main chain, with the condition that neither of the said two adjacent carbon atoms is a terminal carbon atom of this chain; or
(ii) two adjacent carbon atoms located on a side chain.

The presence of internal epoxide groups does not, however, exclude the possibility of epoxide groups in a terminal position also being present in the molecule.

At least two internal epoxide groups are present in the liquid organic compounds according to the present invention. In general, the amount of epoxide groups is such that the epoxide equivalent weight of the epoxidized compound is usually between 40 and 2,000, preferably between 50 and 1,500, more preferably between 100 and 1,000. With the term "epoxide equivalent weight" (EEW) it is meant the molecular weight of the epoxidized compound per mole of oxirane oxygen, namely:

$$EEW = \frac{1600}{\%O}$$

where %O is the content of oxirane oxygen, expressed as a percentage by weight of oxirane oxygen relative to the total weight of the compound. The content of oxirane oxygen in the epoxidized compounds can be determined according to known techniques, for example by titration with a solution of hydrobromic acid in acetic acid.

One class of liquid organic compounds containing internal epoxide groups which are particularly preferred is that of epoxidized oils, which can be obtained by epoxidation of unsaturated fatty acids or esters (in particular glycerides, diglycerides or triglycerides) of unsaturated fatty acids, of synthetic or natural origin, or alternatively by epoxidation of mixtures of the said unsaturated acids or esters with saturated acids or esters thereof. The saturated or unsaturated fatty acids generally contain from 10 to 26 carbon atoms, preferably from 14 to 22 carbon atoms. Examples of unsaturated fatty acids are: myristoleic acid, palmitoleic acid, oleic acid, gadoleic acid, erucic acid, ricinoleic acid, linoleic acid, linolenic acid, arachidonic acid and the like, or mixtures thereof. Examples of saturated fatty acids are: lauric acid, myristic acid, palmitic acid, stearic acid, behenic acid and the like, or mixtures thereof. Plant oils such as, for example: epoxidized linseed oil, epoxidized safflower oil, epoxidized soybean oil, epoxidized corn oil, epoxidized cottonseed oil, epoxidized rapeseed oil, epoxidized castor oil, epoxidized tung oil, epoxidized tall oil, octyl epoxytallate, epoxidized sunflower oil, epoxidized olive oil and the like, or mixtures thereof, are particularly preferred. The epoxidized oils generally have a freezing temperature of less than 23°C, preferably less than 10°C. Products of this type can be found on the market, for example, under the brand names Epoxol® (FACI, American Chemical Service Inc.); Paraplex®, Plasthall® and Monoplex® (C.P. Hall); Vikoflex® and Ecepox® (Elf Atochem).

Another class of liquid organic compounds containing internal epoxide groups which can be used advantageously according to the present invention consists of epoxidized diene oligomers, wherein the base polymer structure, of synthetic or natural origin, is derived from one or more conjugated diene monomers, optionally copolymerized with other monomers containing ethylenic unsaturation. These oligomers generally have an average molecular weight (number-average), which can be determined, for example, by gel permeation chromatography (GPC), of between 500 and 10,000, preferably between 1,000 and 8,000.

Oligomers derived from the (co)polymerization of conjugated diene monomers containing from 4 to 12, preferably from 4 to 8, carbon atoms, selected, for example, from: 1,3-butadiene, isoprene, chloroprene, 2,3-dimethyl-1,3-butadiene, 3-butyl-1,3-octadiene, 2-phenyl-1,3-butadiene and the like, or mixtures thereof, are particularly preferred. 1,3-Butadiene and isoprene are particularly preferred.

The diene monomers can optionally be copolymerized with other monomers containing ethylenic unsaturation, such as, for example: alpha-olefins containing from 2 to 12 carbon atoms (for example ethylene, propylene or 1-butene), monovinylarenes containing from 8 to 20 carbon atoms (for example styrene, 1-vinylnaphthalene or 3-methylstyrene), vinyl esters wherein the ester group contains from 2 to 8 carbon atoms (for example vinyl acetate, vinyl propionate or vinyl butanoate), alkyl acrylates and alkyl methacrylates wherein the alkyl contains from 1 to 8 carbon atoms (for example ethyl acrylate, methyl acrylate, methyl methacrylate, tert-butyl acrylate or n-butyl acrylate), acrylonitrile, and the like, or mixtures thereof.

Among the epoxidized diene oligomers, preferred are those obtained by epoxidation of oligomers of: 1,3-butadiene; isoprene; 1,3-butadiene and styrene; 1,3-butadiene and isoprene; isoprene and styrene; 1,3-butadiene and acrylonitrile; and the like. Epoxidized oligomers of 1,3-butadiene or of isoprene are particularly preferred.

Epoxidized diene oligomers which can be used in the present invention are commercially available, for example under the brand name Poly BD® from Elf Atochem.

The epoxidation reaction of a compound containing internal alkylene groups can be carried out according to known techniques. For example, the starting material can be subjected to direct oxidation using a suitable oxidizing agent such as a peracid (in particular perbenzoic acid, metachloroperbenzoic acid, peracetic acid, trifluoroperacetic acid, perpropionic acid, and the like) or an alkaline oxidizing agent (for example hydrogen peroxide mixed with aqueous sodium hydroxide solution), or alternatively by reaction with oxygen gas in the presence of a catalyst (for example Ag). Alternatively, it is possible to carry out a selective oxidation reaction of the internal alkylene groups by formation of a halohydrin by reaction with a halogen (for example $Cl_2$ or $Br_2$) in the presence of water, followed by alkaline treatment with formation of the epoxide groups. Further details regarding the epoxidation reactions are given, for example, in US patents 4,341,672, 4,851,556 and 5,366,846.

The elastomeric polymers containing carboxylic groups (also referred to for simplicity hereinbelow as "carboxylated elastomeric polymers") which can be used in accordance with the present invention are homopolymers or copolymers with elastomeric properties, which have a glass transition temperature (Tg) of less than 23°C, preferably less than 0°C, and which contain at least 0.1 mol%, preferably from 1 to 30 mol% and even more preferably from 2 to 10 mol%, of carboxylic groups relative to the total number of moles of monomers present in the polymer. Mixtures of various polymers containing carboxylic groups, or mixtures of one or more carboxylated polymers with one or more non-carboxylated elastomeric polymers, also fall within the present definition.

In the case of copolymers, these can have a random, blocked, grafted, or also mixed, structure. The average molecular weight of the base polymer is preferably between 2,000 and 1,000,000, preferably between 50,000 and 500,000.

Carboxylated diene homopolymers or copolymers wherein the base polymer structure, of synthetic or natural origin, is derived from one or more conjugated diene monomers, optionally copolymerized with monovinylarenes and/or polar comonomers, are particularly preferred. Preferably, the base polymer structure is obtained by (co)polymerization of diene monomers containing from 4 to 12, preferably from 4 to 8, carbon atoms, selected, for example, from: 1,3-butadiene, isoprene, 2,3-dimethyl-1,3-butadiene, 3-butyl-1,3-octadiene, 2-phenyl-1,3-butadiene and the like, or mixtures thereof. 1,3-Butadiene and isoprene are particularly preferred.

Monovinylarenes which can optionally be used as comonomers generally contain from 8 to 20, preferably from 8 to 12, carbon atoms and can be selected, for example, from: styrene; 1-vinylnaphthalene; 2-vinylnaphthalene; various alkyl, cycloalkyl, aryl, alkylaryl or arylalkyl derivatives of styrene, such as, for example: 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene and the like, or mixtures thereof. Styrene is particularly preferred. These monovinylarenes can optionally be substituted with one or more functional groups, such as alkoxy groups, for example 4-methoxystyrene, amino groups, for example 4-dimethylaminostyrene, and the like.

Various polar comonomers can be introduced into the base polymer structure, in particular vinylpyridine, vinylquinoline, acrylic and alkylacrylic acid esters, nitriles and the like, or mixtures thereof, such as, for example: methyl acrylate, ethyl acrylate, methyl methacrylate, ethyl methacrylate and acrylonitrile.

Among the base polymer structures which are particularly preferred are: natural rubber, polybutadiene, polyisoprene, styrene/butadiene copolymers, butadiene/isoprene copolymers, styrene/isoprene copolymers, butadiene/acrylonitrile copolymers and the like, or mixtures thereof.

In the case of base structures of copolymer type, the amount of diene comonomer relative to the other comonomers is such as to ensure that the final polymer has elastomeric properties. In this respect, it is not possible generally to establish the minimum amount of diene comonomer required to obtain the desired elastomeric properties. As an indication, an amount of diene comonomer of at least 50% by weight relative to the total weight of the comonomers can generally be considered sufficient.

The preparation of the base polymer can be carried out according to known techniques, generally by (co) polymerization of the corresponding monomers in emulsion, in suspension or in solution.

To introduce carboxylic groups, the base polymer thus obtained can be made to react with a carboxylating agent in the presence of a radical initiator, preferably an organic peroxide (for example dicumyl peroxide or benzoyl peroxide). Carboxylating agents commonly used are, for example: maleic anhydride, itaconic anhydride, thioglycolic acid, beta-mercaptopropionic acid and the like.

The introduction of carboxylic groups can also be carried out during the synthesis of the polymer by copolymerization between a conjugated diene, optionally mixed with monovinylarenes and/or polar comonomers, as reported above, and an olefinic monomer containing one or more carboxylic groups, or a derivative thereof. Carboxylated olefinic monomers usually used are, for example: acrylic acid, methacrylic acid, sorbic acid, beta-acryloxypropanoic acid, ethacrylic acid, 2-ethyl-3-propylacrylic acid, vinylacrylic acid, itaconic acid, cinnamic acid, maleic acid, fumaric acid and the like, or mixtures thereof. Within this class of carboxylated elastomeric polymers, the following are particularly preferred: 1,3-butadiene/(meth)acrylic acid copolymers, 1,3-butadiene/acrylonitrile/(meth)acrylic acid copolymers, 1,3-butadiene/styrene/(meth)acrylic acid copolymers and the like, or mixtures thereof.

Alternatively, the corresponding carboxylic derivatives can be used, in particular anhydrides, esters, nitriles or amides. In this case, the polymer obtained is then subjected to hydrolysis so as to convert, partially or totally, the functional groups thus introduced into free carboxylic groups.

Carboxylated elastomeric polymers which may also be used are elastomeric copolymers of one or more monoolefins with an olefinic comonomer containing one or more carboxylic groups or derivatives thereof. The monoolefins can be selected from: ethylene and alpha-olefins generally containing from 3 to 12 carbon atoms, such as, for example: propylene, 1-butene, 1-pentene, 1-hexene, 1-octene and the like, or mixtures thereof. The following are preferred: copolymers between ethylene and an alpha-olefin, and optionally a diene; homopolymers of isobutene or copolymers thereof with small amounts of a diene, which are optionally at least partially halogenated. The optional diene contains, in general, from 4 to 20 carbon atoms, and is preferably selected from: 1,3-butadiene, isoprene, 1,4-hexadiene, 1,4-cyclohexadiene, 5-ethylidene-2-norbornene, 5-methylene-2-norbornene, and the like. Among these, the following are particularly preferred: ethylene/ propylene copolymers (EPR) or ethylene/propylene/diene copolymers (EPDM); polyisobutene; butyl rubbers; halobutyl rubbers, in particular chlorobutyl or bromobutyl rubbers; and the like, or mixtures thereof. Carboxylated olefinic comonomers can be selected from those mentioned above for the diene polymers. When a diene comonomer is present, it can be used to introduce carboxylic groups by means of the carboxylation reaction as described above.

Further information regarding structure and production processes of carboxylated elastomers are given, for example, in the article by H.P. Brown in *Rubber Chemistry and Technology,* Vol. XXX, 5, page 1347 et seq (1957) or also in US patent 2,724,707.

Examples of carboxylated elastomeric polymers which can be used in the present invention and which are currently commercially available are the products Nipol® EP (Nippon Zeon) or the products of the series Krynac® X (Bayer).

In accordance with the present invention, the epoxidized liquid compound is mixed with the carboxylated elastomeric polymer in proportions which vary as a function of the amount of functional groups present and as a function of the elastic properties which it is desired to obtain for the final product. In general, the amount of epoxidized liquid compound can range between 5 and 200 parts by weight, preferably between 10 and 120 parts by weight, per 100 parts by weight of elastomeric polymer.

For the purpose of increasing the crosslinking rate, an effective amount of a crosslinking accelerator is added to the crosslinkable compositions according to the present invention. Said crosslinking accelerator comprises at least an oxide or an inorganic salt of a metal selected from Fe, Cu, Sn, Mo and Ni. When an inorganic salt is used, it is preferably selected from chlorides, bromides, sulfates, nitrates, either hydrated or anhydrous.

For example the crosslinking accelerator is selected from $SnCl_2.2H_2O$, $CuSO_4.5H_2O$, $(NH_4)_2Fe(SO_4)_2.6H_2O$, $Ni(NO_3)_2$.

EP 1 231 079 B1

$6H_2O$, $MoO_3$. According to the present invention the amount of oxide or inorganic salt to be added is generally from 0.1 to 2 parts by weight of metal, preferably from 0.4 to 1 parts by weight, relative to 100 parts by weight of carboxylated elastomeric polymer. The accelerator can be used in admixture with a condensation catalyst, for example selected from:

- carboxylates of metals such as tin, zinc, zirconium, iron, lead, cobalt, barium, calcium, manganese and the like, for example: dibutyltin dilaurate, dibutyltin diacetate, dioctyltin dilaurate, stannous acetate, stannous caprylate, lead naphthenate, zinc caprylate, zinc naphthenate, cobalt naphthenate, ferrous octanoate, iron 2-ethylhexanoate, and the like;
- arylsulphonic acids or derivatives thereof, for example: p-dodecylbenzenesulphonic acid, tetrapropylbenzenesulphonic acid, acetyl p-dodecylbenzenesulphonate, 1-naphthalene sulphonic acid, 2-naphthalene sulphonic acid, acetylmethyl sulphonate, acetyl p-toluenesulphonate, and the like;
- strong inorganic acids or bases, such as sodium hydroxide, potassium hydroxide, hydrochloric acid, sulphuric acid and the like;
- amines and alkanolamines, for example ethylamine, dibutylamine, hexylamine, pyridine, dimethylethanolamine and the like;

or mixtures thereof.

The crosslinkable compositions according to the present invention can contain reinforcing fillers, in an amount generally of between 20 and 120 phr, preferably between 40 and 90 phr (phr = parts by weight per 100 parts of polymer base). The reinforcing filler can be selected from those commonly used for crosslinked products, and in particular for tyres, such as: carbon black, silica, alumina, aluminosilicates, calcium carbonate, kaolin and the like, or mixtures thereof.

The crosslinkable compositions according to the present invention can comprise other commonly used additives selected on the basis of the specific application for which they are intended. For example, the following can be added to these compositions: antioxidants, protective agents, plasticizers, compatibilizing agents for the reinforcing filler, adhesives, anti-ozone agents, modifying resins, fibres (for example Kevlar® pulp) and the like.

In particular, for the purpose of further improving processability, a lubricant can be added to the crosslinkable compositions according to the present invention, this lubricant being selected in general from mineral oils, vegetable oils, synthetic oils and the like, or mixtures thereof, for example: aromatic oil, naphthenic oil, phthalic oil, soybean oil and the like. The amount of lubricant can range in general from 2 to 100 phr, preferably from 5 to 50 phr.

The crosslinkable compositions according to the present invention can be prepared by mixing the polymer base and the reinforcing filler optionally present and the other additives according to techniques known in the art. The mixing can be carried out, for example, using an open-mill mixer, or an internal mixer of the type with tangential rotors (Banbury) or interlocking rotors (Intermix), or in continuous mixers of the Ko-Kneader (Buss) or co-rotating or counter-rotating twin-screw type.

During the mixing, the temperature is kept below a predetermined value so as to avoid premature crosslinking of the composition. To this end, the temperature is generally kept below 170°C, preferably below 150°C, even more preferably below 140°C. As regards the mixing time, this can vary within a wide range, depending mainly on the specific composition of the mixture, on the presence of any fillers and on the type of mixer used. In general, a mixing time of more than 90 sec, preferably between 3 and 35 min, is sufficient to obtain a homogeneous composition.

In order to optimize the dispersion of the filler while keeping the temperature below the values indicated above, multi-step mixing processes can also be employed, optionally using a combination of different mixers arranged in series.

As an alternative to the abovementioned solid-state mixing processes, in order to improve the dispersion of the components, the crosslinkable compositions according to the present invention can advantageously be prepared by mixing the epoxidized liquid compound, and optionally the reinforcing filler and the other additives, with the polymer base in the form of an aqueous emulsion or a solution in an organic solvent. The filler can be used as such or in the form of a suspension or dispersion in an aqueous medium. The polymer is subsequently separated from the solvent or from the water by suitable means. For example, when a polymer in emulsion is used, the polymer can be precipitated in the form of particles including the oily phase and any filler by adding a coagulant. A coagulant which can be used in particular is an electrolytic solution, for example an aqueous sodium or potassium silicate solution. The coagulation process can be promoted by using a volatile organic solvent which is then removed by evaporation during precipitation of the filled polymer. Further details regarding processes of this type for the preparation of elastomeric compositions are given, for example, in US patent 3,846,365.

The present invention will now be illustrated in further detail by means of a number of working examples, with reference to:

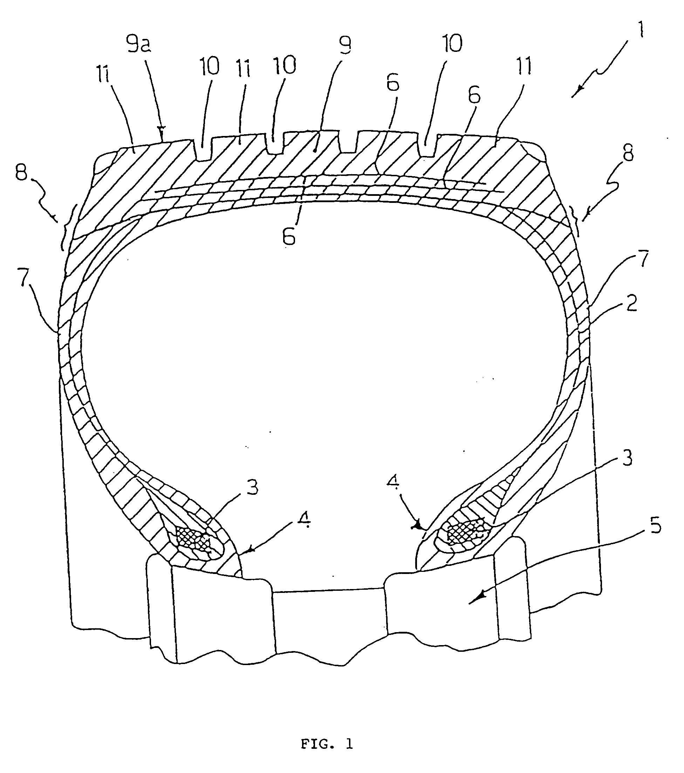

the attached Figure 1, which is a view in cross section with partial cutaway of a tyre according to the present invention.

7

With reference to Fig. 1, a tyre 1 conventionally comprises at least one carcass ply 2 whose opposite side edges are coupled to respective anchoring bead wires 3, each enclosed in a bead 4 defined along an inner circumferential edge of the tyre, with which the tyre engages on a rim 5 forming part of the wheel of a vehicle.

The coupling between the carcass ply 2 and the bead wires 3 is usually carried out by folding the opposite lateral edges of the carcass ply 2 around the bead wires 3, so as to form the so-called carcass folds.

Alternatively, the conventional bead wires 3 can be replaced with a pair of circumferentially unextensible annular inserts formed from elongated components arranged in concentric spirals (not represented in Fig. 1) (see, for example, European patent applications EP-A-0 928 680 and EP-A-0 928 702). In this case, the carcass ply 2 is not folded around the said annular inserts, the coupling being provided by a second carcass ply (not represented in Fig. 1) applied externally onto the first.

Along the circumference of the carcass ply 2 are applied one or more belt strips 6, made using metal or textile cords enclosed in a rubber sheet. Outside the carcass ply 2, in respective opposite side portions of this ply, there is also applied a pair of side walls 7, each of which extends from the bead 4 to a so-called "shoulder" region 8 of the tyre, defined by the opposing ends of the belt strips 6. On the belt strips 6 is circumferentially applied a tread band 9 whose side edges end at the shoulders 8, joining it to the side walls 7. The tread band 9 has an external rolling surface 9a, intended to come into contact with the ground, in which circumferential grooves 10 intercalated with transverse cuttings (not shown in the attached figure) can be provided which define a plurality of blocks 11 variously distributed on the said rolling surface 9a.

The process for producing the tyre according to the present invention can be carried out according to techniques and using apparatus known in the art (see, for example, patents EP-199 064, US-4 872 822 and US-4 768 937). More particularly, this process comprises a step of manufacturing the green tyre, in which a series of semi-finished elements, prepared beforehand and separately from each other and corresponding to the various parts of the tyre (carcass plies, belt strips, bead wires, fillings, side walls and tread band) are combined together using a suitable manufacturing machine.

The green tyre thus obtained is then subjected to the subsequent steps of moulding and crosslinking. To this end, a vulcanization mould is used which is designed to receive the tyre being processed inside a moulding cavity having walls which are countermoulded to the outer surface of the tyre when the crosslinking is complete. Alternative processes for producing a tyre or tyre parts without using semi-finished elements are described, for example, in the abovementioned patent applications EP-A-0 928 680 and EP-A-0 928 702.

The green tyre can be moulded by introducing a pressurized fluid into the space defined by the inner surface of the tyre, so as to press the outer surface of the green tyre against the walls of the moulding cavity. In one of the moulding methods widely practised, a vulcanization chamber made of elastomeric material, filled with steam and/or another fluid under pressure, is inflated inside the tyre closed inside the moulding cavity. In this way, the green tyre is pushed against the inner walls of the moulding cavity, thus obtaining the desired moulding. Alternatively, the moulding can be carried out without an inflatable vulcanization chamber, by providing inside the tyre a toroidal metal support shaped according to the configuration of the inner surface of the tyre to be obtained (see, for example, patent EP-242,840). The difference in coefficient of thermal expansion between the toroidal metal support and the crude elastomeric material is exploited to achieve an adequate moulding pressure.

At this point, the step of crosslinking of the crude elastomeric material present in the tyre is carried out. To this end, the outer wall of the vulcanization mould is placed in contact with a heating fluid (generally steam) such that the outer wall reaches a maximum temperature generally of between 100°C and 230°C. Simultaneously, the inner surface of the tyre is brought to the crosslinking temperature using the same pressurized fluid used to press the tyre against the walls of the moulding cavity, heated to a maximum temperature of between 100 and 250°C. The time required to obtain a satisfactory degree of crosslinking throughout the mass of the elastomeric material can vary in general between 3 min and 90 min and depends mainly on the dimensions of the tyre.

The present invention will now be illustrated in further detail by means of a number of preparation examples.

Examples 1-6

The compositions reported in Table 1 were prepared using an open cylinder mixer, with a mixing time of about 30 min, reaching a final temperature of about 130°C.

The crosslinking rate with and without (comparative Example 6) the accelerators according to the present invention was evaluated.

The compositions thus prepared were subjected to MDR rheometric analysis using a MDR rhometer from Monsanto, the tests being carried out at 200°C for 30 minutes, with an oscillation frequency of 1.66 Hz (100 oscillations per minute) and an oscillation amplitude of ± 0.5°.In table 1 the t90 value is reported, i.e. the time corresponding to a torque value of ML+0.9(MH-ML), wherein ML is the value of minimun torque, and MH is the value of maximum torque. The mechanical properties (according to ISO standard 37) and the hardness in IRHD degrees (according to ISO standard 48) were measured on samples of the said compositions crosslinked at 200°C for 15 min. The results are given in Table 1.

Table 1

|  | 1 | 2 | 3 | 4 | 5 | 6* |
|---|---|---|---|---|---|---|
|  |  |  |  |  |  |  |
| XNBR | 100 | 100 | 100 | 100 | 100 | 100 |
| SiO2 | 70 | 70 | 70 | 70 | 70 | 70 |
| Epoxidized oil | 70 | 70 | 70 | 70 | 70 | 70 |
| TMQ | 1 | 1 | 1 | 1 | 1 | 1 |
| 6PPD | 2 | 2 | 2 | 2 | 2 | 2 |
|  |  |  |  |  |  |  |
| CuSO4.5 H2O | 1.25 |  |  |  |  |  |
| MoO3 |  | 0.75 |  |  |  |  |
| Ni(NO3). 6H20 |  |  | 2.5 |  |  |  |
| (NH4)2Fe (SO4) 2.6H20 |  |  |  | 3.5 |  |  |
| SnCl2.2H20 |  |  |  |  | 0.95 |  |
|  |  |  |  |  |  |  |
|  |  |  |  |  |  |  |
| T90 (sec) | 5.09 | 9.02 | 10.88 | 5.83 | 6.24 | 13.43 |
|  |  |  |  |  |  |  |
| Stress 300% (MPa) | 3.8 | 3.8 | 3.27 | 2.57 | 3.95 | 4.82 |
| Stress at break (MPa) | 10.38 | 9.36 | 9.81 | 9.73 | 11.4 | 9.4 |
| Elongation at break | 655 | 626 | 718 | 787 | 777 | 537 |
| IRHD hardness at 23°C (degrees) | 67.8 | 68.4 | 66.2 | 58.1 | 50 | 68.8 |
| IRHD hardness at 100°C (degrees) | 56.7 | 57.6 | 49.1 | 47.9 | 36.5 | 56.8 |

*comparative
6PPD: antiageing additive (SANTOFLEX® by Monsanto) epoxidized oil: epoxidated soybean oil having: freezing point = 5°C, average molecular weight = 1,000 and epoxide equivalent weight = 210 (Paraplex® G-60 C.P. Hall);
SiO2: precipitated silica with a BET surface area of about 165 m2/g (Zeosil® 1165MP, Rhône Poulenc)
XNBR: terpolymer acrylonitrile/butadiene/carboxylated monomer containing 28% by weight of acrylonitrile and 7.5% by weight of carboxylic groups (Nipol EP® 1072, Nippon Zeon);

The examples reported in Table 1 demonstrate that, with the compositions according to the invention, comprising a carboxylated polymer, a liquid epoxidized compound and an accelerator of the present invention, it is possible to achieve a high degree of crosslinking in much shorter time if compared with the comparative example wherein no crosslinking accelerator according with the invention is present (Ex. 6).

These accelerators, moreover, allow to improve the tensile properties of the compositions as results from stress at break and elongation at break.

## Claims

1. Process for producing tyres for vehicle wheels, the said process comprising the following steps:

   manufacturing a green tyre comprising at least one crosslinkable elastomeric material;
   subjecting the green tyre to moulding in a mould cavity defined in a vulcanization mould;
   crosslinking the elastomeric material by heating the tyre;

   **characterized in that** the crosslinkable elastomeric material comprises: (a) at least an elastomeric polymer containing carboxylic groups, (b) at least an epoxidized organic compound, liquid at room temperature, said epoxidized organic compound containing epoxide groups located internally on the molecule, each epoxide group having one oxirane bridge connecting:

   (i) two adjacent carbon atoms located on the main chain, with the condition that neither of the said two adjacent carbon atoms is a terminal carbon atom of this chain; or
   (ii) two adjacent carbon atoms located on a side chain; and (c) at least an oxide or an inorganic salt of a metal selected from Fe, Cu, Sn, Mo and Ni,

   the said crosslinking step being carried out substantially in the absence of additional crosslinking agents.

2. Process according to Claim 1, wherein the crosslinking step is carried out by heating the crosslinkable elastomeric material to a temperature of at least 120°C for a time of at least 3 minutes.

3. Process according to Claim 2, wherein the crosslinking step is carried out by heating the crosslinkable elastomeric material to a temperature of from 130°C to 230°C for a time of from 5 to 90 minutes.

4. Process according to any one of the preceding claims, wherein the elastomeric material also comprises a reinforcing filler.

5. Process according to claim 4, wherein the reinforcing filler is present in an amount of between 20 and 120 phr.

6. Process according to claim 5, wherein the reinforcing filler is present in an amount of between 40 and 90 phr.

7. Process according to any one of the preceding claims, wherein the epoxidized organic compound has an epoxide equivalent weight of between 40 and 2,000.

8. Process according to claim 7, wherein the epoxidized organic compound has an epoxide equivalent weight of between 50 and 1,500.

9. Process according to claim 8, wherein the epoxidized organic compound has an epoxide equivalent weight of between 100 and 1,000.

10. Process according to any one of the preceding claims, wherein the epoxidized organic compound comprises an epoxidized oil.

11. Process according to Claim 10, wherein the epoxidized oil has a freezing temperature lower than 23°C.

12. Process according to any one of the claims from 1 to 9, wherein the epoxidized organic compound comprises an epoxidized diene oligomer.

13. Process according to Claim 12, wherein the epoxidized diene oligomer has an average molecular weight of between 500 and 10,000.

14. Process according to Claim 13, wherein the epoxidized diene oligomer has an average molecular weight of between 1,000 and 8,000.

15. Process according to Claims from 12 to 14, wherein the epoxidized diene oligomer is an epoxidized oligomer of 1,3-butadiene or isoprene, or mixtures thereof.

16. Process according to any one of the preceding claims, wherein the elastomeric polymer containing carboxylic groups is a homopolymer or copolymer containing at least 0.1 mol% of carboxylic groups, relative to the total number of moles of monomers in the polymer.

17. Process according to claim 16, wherein the carboxylated elastomeric polymer contains from 1 to 30 mol%, of carboxylic groups.

18. Process according to claims 16 or 17, wherein the carboxylated elastomeric polymer has an average molecular weight of between 2,000 and 1,000,000.

19. Process according to claim 18, wherein the carboxylated elastomeric polymer has an average molecular weight of between 50,000 and 500,000.

20. Process according to any one of the preceding claims, wherein the carboxylated elastomeric polymer is obtained by (co)polymerization of one or more conjugated diene monomers, optionally in admixture with monovinylarenes and/or polar comonomers, said polar comonomers being selected from: vinylpyridine, vinylquinoline, acrylic and alkylacrylic acid esters, nitriles, or mixtures thereof, and subsequent carboxylation.

21. Process according to any one of Claims 1 to 19, wherein the carboxylated elastomeric polymer is obtained by copolymerization between a conjugated diene, optionally in admixture with monovinylarenes and/or polar comonomers, said polar comonomers being selected from: vinylpyridine, vinylquinoline, acrylic and alkylacrylic acid esters, nitriles, or mixtures thereof, and an olefinic monomer containing one or more carboxylic groups or derivatives thereof.

22. Process according to any one of Claims from 1 to 19, wherein the carboxylated elastomeric polymer is obtained by copolymerization of one or more monoolefins with an olefinic comonomer containing one or more carboxylic groups or derivatives thereof.

23. Process according to any one of the preceding claims, wherein the epoxidized compound is present in an amount of between 5 and 200 parts by weight per 100 parts by weight of elastomeric polymer.

24. Process according to claim 23, wherein the epoxidized compound is present in an amount of between 10 and 120 parts by weight per 100 parts by weight of elastomeric polymer.

25. Process according to any one of the preceding claims, wherein said salt is selected from chlorides, bromides, sulfates and nitrates, either anhydrous or hydrated.

26. Process according to any one of the proceding claims, wherein said oxide or inorganic salt of a metal is selected from $SnCl_2.2H_2O$, $CuSO_4.5H_2O$, $(NH_4)_2Fe(SO_4)_2.6H_2O$, $Ni(NO_3)_2.6H_2O$, $MoO_3$.

27. Process according to claim 26, wherein said inorganic salt of a metal is CuSO4.5H2O.

28. Process according to any one of the proceding claims, wherein said oxide or inorganic salt of a metal is present in an amount of from 0.1 to 2 parts by weight of metal per 100 parts by weight of carboxylated polymer.

29. Process according to claim 28, wherein said oxide or inorganic salt of a metal is present in an amount of from 0.4 to 1 parts by weight of metal per 100 parts by weight of carboxylated polymer.

30. Tyre for vehicle wheels, comprising one or more components made of crosslinked elastomeric material, **characterized in that** at least one of the said components comprises, as crosslinked elastomeric material, at least an elastomeric polymer containing carboxylic groups which is crosslinked by reaction with at least an epoxidized organic compound, liquid at room temperature, said epoxidized organic compound containing epoxide groups located internally on the molecule, each epoxide group having one oxirane bridge connecting:

(i) two adjacent carbon atoms located on the main chain, with the condition that neither of the said two adjacent carbon atoms is a terminal carbon atom of this chain; or
(ii) two adjacent carbon atoms located on a side chain; in the presence of at least an oxide or an inorganic salt of a metal selected from Fe, Cu, Sn, Mo and Ni, wherein the said carboxylated elastomeric polymer is crosslinked substantially in the absence of additional crosslinking agents.

31. Tyre according to Claim 30, wherein the said crosslinked elastomeric material also comprises a reinforcing filler.

32. Tyre according to Claim 31, wherein the reinforcing filler is present in an amount of between 20 and 120 phr

33. Tyre according to Claim 32, wherein the reinforcing filler is present in an amount of between 40 and 90 phr

34. Tyre according to any one of Claims from 30 to 33, wherein the epoxidized organic compound is defined according to any one of Claims from 7 to 15.

35. Tyre according to any one of Claims from 30 to 34, wherein the elastomeric polymer containing carboxylic groups is defined according to any one of Claims from 16 to 22.

36. Tyre according to any one of Claims from 30 to 35, wherein the oxide or inorganic salt of a metal is defined according to any one of Claims from 25 to 29.

37. Tyre for vehicles, comprising a belt structure extended coaxially around a carcass structure and a tread band extended coaxially around the belt structure and having an external rolling surface which is intended to come into contact with the ground, **characterized in that** the said tread band comprises at least an elastomeric polymer containing carboxylic groups crosslinked by reaction with at least an epoxidized organic compound, liquid at room temperature, said epoxidized organic compound containing epoxide groups located internally on the molecule, each epoxide group having one oxirane bridge connecting:

(i) two adjacent carbon atoms located on the main chain, with the condition that neither of the said two adjacent carbon atoms is a terminal carbon atom of this chain; or
(ii) two adjacent carbon atoms located on a side chain; in the presence of at least an oxide or an inorganic salt of a metal selected from Fe, Cu, Sn, Mo and Ni, wherein the said carboxylated elastomeric polymer is crosslinked substantially in the absence of additional crosslinking agents.

38. Tyre according to Claim 37, wherein the tread band also comprises a reinforcing filler.

39. Tyre according to Claim 38, wherein the reinforcing filler is present in an amount of between 20 and 120 phr

40. Tyre according to Claim 39, wherein the reinforcing filler is present in an amount of between 40 and 90 phr

41. Tyre according to any one of Claims from 37 to 40, wherein the epoxidized organic compound is defined according to any one of Claims from 7 to 15.

42. Tyre according to any one of Claims 37 to 41, wherein the elastomeric polymer containing carboxylic groups is defined according to any one of Claims from 16 to 22.

43. Tyre according to any one of Claims from 37 to 42, wherein the oxide or inorganic salt of a metal is defined according to any one of Claims from 25 to 29.

44. Crosslinkable elastomeric composition comprising: (a) at least an elastomeric polymer containing carboxylic groups; (b) at least an epoxidized organic compound, liquid at room temperature, said epoxidized organic compound containing epoxide groups located internally on the molecule, each epoxide group having one oxirane bridge connecting:

(i) two adjacent carbon atoms located on the main chain, with the condition that neither of the said two adjacent carbon atoms is a terminal carbon atom of this chain; or

(ii) two adjacent carbon atoms located on a side chain; and (c) at least an oxide or an inorganic salt of a metal selected from Fe, Cu, Sn, Mo and Ni; the said composition being crosslinkable substantially in the absence of additional crosslinking agents.

**45.** Crosslinkable elastomeric composition according to Claim 44, also comprising a reinforcing filler.

**46.** Composition according to Claim 45, wherein the reinforcing filler is present in an amount of between 20 and 120 phr.

**47.** Composition according to Claim 46, wherein the reinforcing filler is present in an amount of between 40 and 90 phr.

**48.** Composition according to any one of Claims from 44 to 47, wherein the epoxidized liquid organic compound has an epoxide equivalent weight of between 40 and 2,000.

**49.** Composition according to Claim 48, wherein the epoxidized organic compound has an epoxide equivalent weight of between 50 and 1,500.

**50.** Composition according to Claim 49, wherein the epoxidized organic compound has an epoxide equivalent weight of between 100 and 1,000.

**51.** Composition according to any one of Claims from 44 to 50, wherein the epoxidized organic compound comprises an epoxidized oil.

**52.** Composition according to Claim 51, wherein the epoxidized oil has a freezing temperature lower than 23°C.

**53.** Composition according to any one of Claims from 44 to 50, wherein the epoxidized organic compound comprises an epoxidized diene oligomer.

**54.** Composition according to Claim 53, wherein the epoxidized diene oligomer has an average molecular weight of between 500 and 10,000.

**55.** Composition according to Claim 54, wherein the epoxidized diene oligomer has an average molecular weight of between 1,000 and 8,000.

**56.** Composition according to any one of Claims from 53 to 55, wherein the epoxidized diene oligomer is an epoxidized oligomer of 1,3-butadiene or isoprene, or mixtures thereof.

**57.** Composition according to any one of Claims from 44 to 56, wherein the elastomeric polymer containing carboxylic groups is a homopolymer or copolymer containing at least 0.1 mol% of carboxylic groups relative to the total number of moles of monomers present in the polymer.

**58.** Composition according to claim 57, wherein the carboxylated elastomeric polymer contains from 1 to 30 mol% of carboxylic groups.

**59.** Composition according to claims 57 or 58, wherein the carboxylated elastomeric polymer has an average molecular weight of between 2,000 and 1,000,000.

**60.** Composition according to claim 59, wherein the carboxylated elastomeric polymer has an average molecular weight of between 50,000 and 500,000.

**61.** Composition according to any one of Claims from 44 to 60, wherein the carboxylated elastomeric polymer is obtained by (co)polymerization of one or more conjugated diene monomers, optionally in admixture with monovinylarenes and/or polar comonomers, said polar comonomers being selected from: vinylpyridine, vinylquinoline, acrylic and alkylacrylic acid esters, nitriles, or mixtures thereof, and subsequent carboxylation.

**62.** Composition according to any one of Claims from 44 to 60, wherein the carboxylated elastomeric polymer is obtained by copolymerization between a conjugated diene, optionally in admixture with monovinylarenes and/or polar comonomers, said polar comonomers being selected from: vinylpyridine, vinylquinoline, acrylic and alkylacrylic acid esters, nitriles, or mixtures thereof, and an olefinic monomer containing one or more carboxylic groups, or a derivative thereof.

63. Composition according to any one of Claims from 44 to 60, wherein the carboxylated elastomeric polymer is obtained by copolymerization of one or more monoolefins with an olefinic comonomer containing one or more carboxylic groups or derivatives thereof.

64. Composition according to any one of Claims from 44 to 63, wherein the epoxidized liquid compound is present in an amount of between 5 and 200 parts by weight per 100 parts by weight of elastomeric polymer.

65. Composition according to Claim 64, wherein the epoxidized liquid compound is present in an amount of between between 10 and 120 parts by weight per 100 parts by weight of elastomeric polymer.

66. Composition according to any one of Claims from 44 to 65, wherein the oxide or inorganic salt of a metal is defined according to any one of Claims from 25 to 29.

67. Crosslinked elastomeric product obtained by crosslinking a composition according to any one of Claims from 44 to 66.

**Patentansprüche**

1. Verfahren zur Herstellung von Reifen für Kraftfahrzeugräder, das folgende Stufen umfasst:

   Herstellung eines grünen Reifens, der wenigstens ein vernetzbares elastomeres Material umfasst,

   Formung des grünen Reifens in einem in einer Vulkanisationsform begrenzten Formhohlraum und

   Vernetzung des elastomeren Materials durch Erwärmung des Reifens.

   **dadurch gekennzeichnet, dass** das vernetzbare elastomere Material

   a) wenigstens ein Carboxylgruppen enthaltendes elastomeres Polymer,
   b) wenigstens eine bei Raumtemperatur flüssige epoxidierte organische Verbindung, die innen am Molekül angeordnete Epoxidgruppen enthält, von denen jede eine Oxiranbrücke aufweist, die

      (i) zwei angrenzende, an der Hauptkette angeordnete C-Atome unter der Bedingung, dass keines der zwei angrenzenden C-Atome ein endständiges C-Atom dieser Kette ist, oder

      (ii) zwei angrenzende, an einer Seitenkette angeordnete C-Atome miteinander verbindet,

   und c) wenigstens ein Oxid oder ein organisches Salz eines Metalls, ausgewählt unter Fe, Cu, Sn, Mo und Ni, umfasst,

   wobei die Vernetzungsstufe im wesentlichen in Abwesenheit zusätzlicher Vernetzungsmittel durchgeführt wird.

2. Verfahren nach Anspruch 1, bei dem die Vernetzungsstufe durch Erwärmung des vernetzbaren elastomeren Materials auf eine Temperatur von wenigstens 120°C während wenigstens 3 Minuten durchgeführt wird.

3. Verfahren nach Anspruch 2, bei dem die Vernetzungsstufe durch Erwärmung des vernetzbaren elastomeren Materials auf eine Temperatur von 130 bis 230°C während 5 bis 90 Minuten durchgeführt wird.

4. Verfahren nach einem der vorhergehenden Ansprüche, bei dem das elastomere Material außerdem einen Verstärkungsfüller umfasst.

5. Verfahren nach Anspruch 4, bei dem der Verstärkungsfüller in einer Menge von 20 bis 120 Teilen pro 100 Teile Kautschuk vorliegt.

6. Verfahren nach Anspruch 5, bei dem der Verstärkungsfüller in einer Menge von 40 bis 90 Teilen pro 100 Teile Kautschuk vorliegt.

7.  Verfahren nach einem der vorhergehenden Ansprüche, bei dem die epoxidierte organische Verbindung ein Epoxidäquivalentgewicht zwischen 40 und 2.000 hat.

8.  Verfahren nach Anspruch 7, bei dem die epoxidierte organische Verbindung ein Epoxidäquivalentgewicht zwischen 50 und 1500 hat.

9.  Verfahren nach Anspruch 8, bei dem die epoxidierte organische Verbindung ein Epoxidäquivalentgwicht zwischen 100 und 1000 hat.

10. Verfahren nach einem der vorhergehenden Ansprüche, bei dem die epoxidierte organische Verbindung ein epoxidiertes Öl umfasst.

11. Verfahren nach Anspruch 10, bei dem das epoxidierte Öl eine Gefriertemperatur von unter 23°C hat.

12. Verfahren nach einem der Ansprüche 1 bis 9, bei dem die epoxidierte organische Verbindung ein epoxidiertes Dienoligomer umfasst.

13. Verfahren nach Anspruch 12, bei dem das epoxidierte Dienoligomer ein mittleres Molekulargewicht zwischen 500 und 10.000 hat.

14. Verfahren nach Anspruch 13, bei dem das epoxidierte Dienoligomer ein mittleres Molekulargewicht zwischen 1.000 und 8.000 hat.

15. Verfahren nach den Ansprüchen 12 bis 14, bei dem das epoxidierte Dienoligomer ein epoxidiertes Oligomer von 1,3-Butadien oder Isopren oder Gemische davon darstellt.

16. Verfahren nach einem der vorhergehenden Ansprüche, bei dem das Carboxylgruppen enthaltende elastomere Polymer ein Homopolymer oder Copolymer ist, das wenigstens 0,1 Mol-% Carboxylgruppen, bezogen auf die Gesamtmolzahl an Monomeren im Polymer, enthält.

17. Verfahren nach Anspruch 16, bei dem das carboxylierte elastomere Polymer 1 bis 30 Mol-% Carboxylgruppen enthält.

18. Verfahren nach den Ansprüchen 16 oder 17, bei dem das carboxylierte elastomere Polymer ein mittleres Molekulargewicht zwischen 2.000 und 1.000.000 hat.

19. Verfahren nach Anspruch 18, bei dem das carboxylierte elastomere Polymer ein mittleres Molekulargewicht zwischen 50.000 und 500.000 hat.

20. Verfahren nach einem der vorhergehenden Ansprüche, bei dem das carboxylierte elastomere Polymer durch (Co) Polymerisation eines oder mehrerer konjugierter Dienmonomere, gegebenenfalls im Gemisch mit Monovinylarenen und/oder polaren Comonomeren, die unter Vinylpyridin, Vinylchinolin, Acryl- und Alkylacrylsäureestern, Nitrilen oder Gemischen davon ausgewählt werden, und nachfolgende Carboxylierung erhalten wird.

21. Verfahren nach einem der Ansprüche 1 bis 19, bei dem das carboxylierte elastomere Polymer durch Copolymerisation zwischen einem konjugierten Dien, gegebenenfalls im Gemisch mit polaren Monovinylarenen und/oder polaren Comonomeren, die unter Vinylpyridin, Vinylchinolin, Acryl- und Alkylacrylsäureestern, Nitrilen oder Gemischen davon ausgewählt werden, und einem olefinischen Monomer, das eine oder mehrere Carboxylgruppen oder Derivate davon enthält, erhalten wird.

22. Verfahren nach einem der Ansprüche 1 bis 19, bei dem das carboxylierte elastomere Polymer durch Copolymerisation eines oder mehrerer Monoolefine mit einem olefinischen Comonomer, das eine oder mehrere Carboxylgruppen oder Derivate davon enthält, erhalten wird.

23. Verfahren nach einem der vorhergehenden Ansprüche, bei dem die epoxidierte Verbindung in einer Menge zwischen 5 und 200 Gewichtsteilen pro 100 Gewichtsteile elastomeres Polymer vorliegt.

**EP 1 231 079 B1**

**24.** Verfahren nach Anspruch 23, bei dem die epoxidierte Verbindung in einer Menge zwischen 10 und 120 Gewichtsteilen pro 100 Gewichtsteile elastomeres Polymer vorliegt.

**25.** Verfahren nach einem der vorhergehenden Ansprüche , bei dem das Salz unter wasserfreien oder hydratisierten Chloriden, Bromiden, Sulfaten und Nitraten ausgewählt wird.

**26.** Verfahren nach einem der vorhergehenden Ansprüche, bei dem das Oxid oder anorganische Salz eines Metalls unter $SnCl_2.2H_2O$, $CuSO_4.5H_2O$, $(NH_4)_2Fe(SO_4)_2.6H_2O$, $Ni(NO_3)_2.6H_2O$ und $MoO_3$ ausgewählt wird.

**27.** Verfahren nach Anspruch 26, bei dem das anorganische Salz eines Metalls $CuSO_4.5H_2O$ ist.

**28.** Verfahren nach einem der vorhergehenden Ansprüche, bei dem das Oxid oder anorganische Salz eines Metalls in einer Menge von 0,1 bis 2 Gew.-Teilen Metall pro 100 Gew.-Teile carboxyliertes Polymer vorliegt.

**29.** Verfahren nach Anspruch 28, bei dem das Oxid oder anorganische Salz eines Metalls in einer Menge von 0,4 bis 1 Gew.-Teilen Metall pro 100 Gew.-Teile carboxyliertes Polymer vorliegt.

**30.** Reifen für Kraftfahrzeugräder, der einen oder mehrere Bauteile umfasst, hergestellt aus vernetztem elastomerem Material, **dadurch gekennzeichnet, dass** wenigstens eines der Bauteile als vernetztes elastomeres Material wenigstens ein Carboxylgruppen enthaltendes elastomeres Polymer enthält, das durch Umsetzung mit wenigstens einer bei Raumtemperatur flüssigen epoxidierten organischen Verbindung vernetzt ist, wobei die epoxidierte organische Verbindung, die innen am Molekül angeordnete Epoxidgruppen enthält, von denen jede eine Oxiranbrücke aufweist, die

    (i) zwei angrenzende, an der Hauptkette angeordnete C-Atome unter der Bedingung, dass keines der zwei angrenzenden C-Atome ein endständiges C-Atom dieser Kette ist, oder

    (ii) zwei angrenzende, an einer Seitenkette angeordnete C-Atome miteinander verbindet,

in Anwesenheit wenigstens eines Oxids oder eines organischen Salzes eines Metalls, ausgewählt unter Fe, Cu, Sn, Mo und Ni, wobei das carboxylierte elastomere Polymer im wesentlichen in Abwesenheit zusätzlicher Vernetzungsmittel vernetzt ist.

**31.** Reifen nach Anspruch 30, bei dem das vernetzte elastomere Material außerdem einen Verstärkungsfüller umfasst.

**32.** Reifen nach Anspruch 31, bei dem der Verstärkungsfüller in einer Menge von 20 bis 120 Teilen pro 100 Teile Kautschuk vorliegt.

**33.** Reifen nach Anspruch 32, bei dem der Verstärkungsfüller in einer Menge von 40 bis 90 Teilen pro 100 Teile Kautschuk vorliegt.

**34.** Reifen nach einem der Ansprüche 30 bis 33, bei dem die epoxidierte organische Verbindung nach einem der Ansprüche 7 bis 15 definiert ist.

**35.** Reifen nach einem der Ansprüche 30 bis 34, bei dem das Carboxylgruppen enthaltende elastomere Polymer nach einem der Ansprüche 16 bis 22 definiert ist.

**36.** Reifen nach einem der Ansprüche 30 bis 35, bei dem das Oxid oder anorganische Salz eines Metalls nach einem der Ansprüche 25 bis 29 definiert ist.

**37.** Reifen für Kraftfahrzeuge, der eine sich koaxial um eine Karkassenstruktur erstreckende Gürtelstruktur und ein sich koaxial um die Gürtelstruktur erstreckendes Laufflächenband umfasst und eine äußere Rolloberfläche aufweist, die für die Kontaktierung mit dem Untergrund bestimmt ist, **dadurch gekennzeichnet, dass** das Laufflächenband wenigstens ein Carboxylgruppen enthaltendes elastomeres Polymer umfasst, das durch Umsetzung mit wenigstens einer bei Raumtemperatur flüssigen epoxidierten organischen Verbindung vernetzt ist, wobei die epoxidierte organische Verbindung innen am Molekül angeordnete Epoxidgruppen enthält, von denen jede eine Oxiranbrücke aufweist, die

(i) zwei angrenzende, an der Hauptkette angeordnete C-Atome unter der Bedingung, dass keines der zwei angrenzenden C-Atome ein endständiges C-Atom dieser Kette ist, oder

(ii) zwei angrenzende, an einer Seitenkette angeordnete C-Atome miteinander verbindet,

in Anwesenheit wenigstens eines Oxids oder eines organischen Salzes eines Metalls, ausgewählt unter Fe, Cu, Sn, Mo und Ni, wobei das carboxylierte elastomere Polymer im Wesentlichen in Abwesenheit zusätzlicher zusätzlicher Vernetzungsmittel vernetzt ist.

**38.** Reifen nach Anspruch 37, bei dem das Laufflächenband außerdem einen Verstärkungsfüller umfasst.

**39.** Reifen nach Anspruch 38, bei dem der Verstärkungsfüller in einer Menge von 20 bis 120 Teilen pro 100 Teile Kautschuk vorliegt.

**40.** Reifen nach Anspruch 39, bei dem der Verstärkungsfüller in einer Menge von 40 bis 90 Teilen pro 100 Teile Kautschuk vorliegt.

**41.** Reifen nach einem der Ansprüche 37 bis 40, bei dem die epoxidierte organische Verbindung nach einem der Ansprüche 7 bis 15 definiert ist.

**42.** Reifen nach einem der Ansprüche 37 bis 41, bei dem das Carboxylgruppen enthaltende elastomere Polymer nach einem der Ansprüche 16 bis 22 definiert ist.

**43.** Reifen nach einem der Ansprüche 37 bis 42, bei dem das Oxid oder anorganische Salz eines Metalls nach einem der Ansprüche 25 bis 29 definiert ist.

**44.** Vernetzbares Elastomergemisch, das

a) wenigstens ein Carboxylgruppen enthaltendes elastomeres Polymer,
b) wenigstens eine bei Raumtemperatur flüssige epoxidierte organische Verbindung, die innen am Molekül angeordnete Epoxidgruppen enthält, von denen jede eine Oxiranbrücke aufweist, die

(i) zwei angrenzende, an der Hauptkette angeordnete C-Atome unter der Bedingung, dass keines der zwei angrenzenden C-Atome ein endständiges C-Atom dieser Kette ist, oder

(ii) zwei angrenzende, an einer Seitenkette angeordnete C-Atome miteinander verbindet,

und c) wenigstens ein Oxid oder ein organisches Salz eines Metalls, ausgewählt unter Fe, Cu, Sn, Mo und Ni, umfasst,

wobei dieses Gemisch im Wesentlichen in Abwesenheit zusätzlicher Vernetzungsmittel vernetzbar ist.

**45.** Vernetzbares Elastomergemisch nach Anspruch 44, bei dem das elastomere Material außerdem einen Verstärkungsfüller umfasst.

**46.** Gemisch nach Anspruch 45, bei dem der Verstärkungsfüller in einer Menge von 20 bis 120 Teilen pro 100 Teile Kautschuk vorliegt.

**47.** Gemisch nach Anspruch 46, bei dem der Verstärkungsfüller in einer Menge von 40 bis 90 Teilen pro 100 Teile Kautschuk vorliegt.

**48.** Gemisch nach einem der Ansprüche 44 bis 47, bei dem die epoxidierte organische Verbindung ein Epoxidäquivalentgewicht zwischen 40 und 2.000 hat.

**49.** Gemisch nach Anspruch 48, bei dem die epoxidierte organische Verbindung ein Epoxidäquivalentgewicht zwischen 50 und 1500 hat.

**50.** Gemisch nach Anspruch 49, bei dem die epoxidierte organische Verbindung ein Epoxidäquivalentgwicht zwischen 100 und 1000 hat.

51. Gemisch nach einem der Ansprüche von 44 bis 50, bei dem die epoxidierte organische Verbindung ein epoxidiertes Öl umfasst.

52. Gemisch nach Anspruch 51, bei dem das epoxidierte Öl eine Gefriertemperatur von unter 23°C hat.

53. Gemisch nach einem der Ansprüche 44 bis 50, bei dem die epoxidierte organische Verbindung ein epoxidiertes Dienoligomer umfasst.

54. Gemisch nach Anspruch 53, bei dem das epoxidierte Dienoligomer ein mittleres Molekulargewicht zwischen 500 und 10.000 hat.

55. Gemisch nach Anspruch 54, bei dem das epoxidierte Dienoligomer ein mittleres Molekulargewicht zwischen 1.000 und 8.000 hat.

56. Gemisch nach einem der Ansprüche 53 bis 55, bei dem das epoxidierte Dienoligomer ein epoxidiertes Oligomer von 1,3-Butadien oder Isopren oder Gemische davon darstellt.

57. Gemisch nach einem der Ansprüche 44 bis 56, bei dem das Carboxylgruppen enthaltende elastomere Polymer ein Homopolymer oder Copolymer ist, das wenigstens 0,1 Mol-% Carboxylgruppen, bezogen auf die Gesamtmolzahl an Monomeren im Polymer, enthält.

58. Gemisch nach Anspruch 57, bei dem das carboxylierte elastomere Polymer 1 bis 30 Mol-% Carboxylgruppen enthält.

59. Gemisch nach Anspruch 57 oder 58, bei dem das carboxylierte elastomere Polymer ein mittleres Molekulargewicht zwischen 2.000 und 1.000.000 hat.

60. Gemisch nach Anspruch 59, bei dem das carboxylierte elastomere Polymer ein mittleres Molekulargewicht zwischen 50.000 und 500.000 hat.

61. Gemisch nach einem der Ansprüche 44 bis 60, bei dem das carboxylierte elastomere Polymer durch (Co)Polymerisation eines oder mehrerer konjugierter Dienmonomere, gegebenenfalls im Gemisch mit Monovinylarenen und/oder polaren Comonomeren, die unter Vinylpyridin, Vinylchinolin, Acryl- und Alkylacrylsäureestern, Nitrilen oder Gemischen davon ausgewählt werden, und nachfolgende Carboxylierung erhalten wird.

62. Gemisch nach einem der Ansprüche 44 bis 60, bei dem das carboxylierte elastomere Polymer durch Copolymerisation zwischen einem konjugierten Dien, gegebenenfalls im Gemisch mit polaren Monovinylarenen und/oder polaren Comonomeren, die unter Vinylpyridin, Vinylchinolin, Acryl- und Alkylacrylsäureestern, Nitrilen oder Gemischen davon ausgewählt werden, und einem olefinischen Monomer, das eine oder mehrere Carboxylgruppen oder Derivate davon enthält, erhalten wird.

63. Gemisch nach einem der Ansprüche 44 bis 60, bei dem das carboxylierte elastomere Polymer durch Copolymerisation eines oder mehrerer Monoolefine mit einem olefinischen Comonomer, das eine oder mehrere Carboxylgruppen oder Derivate davon enthält, erhalten wird.

64. Gemisch nach einem der Ansprüche 44 bis 63, bei dem die epoxidierte flüssige Verbindung in einer Menge zwischen 5 und 200 Gewichtsteilen pro 100 Gewichtsteile elastomeres Polymer vorliegt.

65. Gemisch nach Anspruch 64, bei dem die epoxidierte flüssige Verbindung in einer Menge zwischen 10 und 120 Gewichtsteilen pro 100 Gewichtsteile elastomeres Polymer vorliegt.

66. Gemisch nach einem der Ansprüche 44 bis 65, bei dem das Oxid bzw. anorganische Salz eines Metalls entsprechend einem der Ansprüche 25 bis 29 definiert ist.

67. Vernetztes elastomeres Produkt, erhalten durch Vernetzung eines Gemisches nach einem der Ansprüche 44 bis 66.

**Revendications**

1. Procédé de production de pneus pour roues de véhicule, lequel procédé comporte les étapes suivantes :

   fabriquer un pneu cru comprenant au moins un matériau élastomère réticulable,
   soumettre ce pneu cru à une opération de moulage, dans une cavité de moule définie dans un moule de vulcanisation,
   et réticuler le matériau élastomère en chauffant ce pneu ;

   **caractérisé en ce que** le matériau élastomère réticulable comprend :

   a) au moins un polymère élastomère comportant des groupes carboxyliques,
   b) au moins un composé organique époxydé, liquide à température ambiante, dont les molécules contiennent des groupes époxyde internes, chacun de ces groupes époxydes comportant un pont oxirane reliant

   i) deux atomes de carbone adjacents situés dans la chaîne principale, sous réserve que ni l'un ni l'autre de ces deux atomes de carbone adjacents ne soit un atome de carbone terminal de cette chaîne,
   ii) ou deux atomes de carbone adjacents situés dans une chaîne latérale,

   c) et au moins un oxyde ou un sel inorganique d'un métal choisi parmi le fer, le cuivre, l'étain, le molybdène et le nickel,

   ladite étape de réticulation étant réalisée pratiquement en l'absence d'agents supplémentaires de réticulation.

2. Procédé conforme à la revendication 1, dans lequel on réalise l'étape de réticulation en chauffant le matériau élastomère réticulable à une température d'au moins 120 °C pendant un laps de temps d'au moins 3 minutes.

3. Procédé conforme à la revendication 2, dans lequel on réalise l'étape de réticulation en chauffant le matériau élastomère réticulable à une température de 130 à 230 °C pendant un laps de temps de 5 à 90 minutes.

4. Procédé conforme à l'une des revendications précédentes, dans lequel le matériau élastomère contient aussi une charge renforçante.

5. Procédé conforme à la revendication 4, dans lequel la charge renforçante se trouve présente en une proportion de 20 à 120 pcpr (parties pour cent parties de résine).

6. Procédé conforme à la revendication 5, dans lequel la charge renforçante se trouve présente en une proportion de 40 à 90 pcpr.

7. Procédé conforme à l'une des revendications précédentes, dans lequel le composé organique époxydé présente un poids d'équivalent époxyde qui vaut de 40 à 2 000.

8. Procédé conforme à la revendication 7, dans lequel le composé organique époxydé présente un poids d'équivalent époxyde qui vaut de 50 à 1 500.

9. Procédé conforme à la revendication 8, dans lequel le composé organique époxydé présente un poids d'équivalent époxyde qui vaut de 100 à 1 000.

10. Procédé conforme à l'une des revendications précédentes, dans lequel le composé organique époxydé comprend une huile époxydée.

11. Procédé conforme à la revendication 10, dans lequel l'huile époxydée présente une température de congélation inférieure à 23 °C.

12. Procédé conforme à l'une des revendications 1 à 9, dans lequel le composé organique époxydé comprend un oligomère de diène époxydé.

13. Procédé conforme à la revendication 12, dans lequel l'oligomère de diène époxydé présente une masse molaire moyenne de 500 à 10 000.

**14.** Procédé conforme à la revendication 13, dans lequel l'oligomère de diène époxydé présente une masse molaire moyenne de 1 000 à 8 000.

**15.** Procédé conforme à l'une des revendications 12 à 14, dans lequel l'oligomère de diène époxydé est un oligomère époxydé de 1,3-butadiène ou d'isoprène, ou d'un mélange de ceux-ci.

**16.** Procédé conforme à l'une des revendications précédentes, dans lequel le polymère élastomère comportant des groupes carboxyliques est un homopolymère ou un copolymère qui contient au moins 0,1 % en moles de groupes carboxyliques, par rapport au nombre total de moles de monomères constituant le polymère.

**17.** Procédé conforme à la revendication 16, dans lequel le polymère élastomère carboxylé contient de 1 à 30 % en moles de groupes carboxyliques.

**18.** Procédé conforme à la revendication 16 ou 17, dans lequel le polymère élastomère carboxylé présente une masse molaire moyenne de 2 000 à 1 000 000.

**19.** Procédé conforme à la revendication 18, dans lequel le polymère élastomère carboxylé présente une masse molaire moyenne de 50 000 à 500 000.

**20.** Procédé conforme à l'une des revendications précédentes, dans lequel le polymère élastomère carboxylé est obtenu par (co)polymérisation d'un ou de plusieurs monomères diènes conjugués, éventuellement mélangés avec des monovinyl-arènes et/ou des comonomères polaires, lesquels comonomères polaires sont choisis parmi la vinyl-pyridine, la vinyl-quinoléine, les esters d'acide acrylique ou d'acide alkyl-acrylique, et les nitriles, ainsi que leurs mélanges, et carboxylation ultérieure.

**21.** Procédé conforme à l'une des revendications 1 à 19, dans lequel le polymère élastomère carboxylé est obtenu par copolymérisation d'un diène conjugué, éventuellement mélangé avec des monovinyl-arènes et/ou des comonomères polaires, lesquels comonomères polaires sont choisis parmi la vinyl-pyridine, la vinyl-quinoléine, les esters d'acide acrylique ou d'acide alkyl-acrylique, et les nitriles, ainsi que leurs mélanges, et d'un monomère oléfinique comportant un ou plusieurs groupes carboxyle ou dérivés de tels groupes.

**22.** Procédé conforme à l'une des revendications 1 à 19, dans lequel le polymère élastomère carboxylé est obtenu par copolymérisation d'une ou de plusieurs monooléfines et d'un comonomère oléfinique comportant un ou plusieurs groupes carboxyle ou dérivés de tels groupes.

**23.** Procédé conforme à l'une des revendications précédentes, dans lequel le composé époxydé se trouve présent en une proportion de 5 à 200 parties en poids pour 100 parties en poids de polymère élastomère.

**24.** Procédé conforme à la revendication 23, dans lequel le composé époxydé se trouve présent en une proportion de 10 à 120 parties en poids pour 100 parties en poids de polymère élastomère.

**25.** Procédé conforme à l'une des revendications précédentes, dans lequel ledit sel est choisi parmi les chlorures, bromures, sulfates et nitrates, anhydres ou hydratés.

**26.** Procédé conforme à l'une des revendications précédentes, dans lequel ledit oxyde ou sel inorganique de métal est choisi parmi $SnCl_2.2H_2O$, $CuSO_4.5H_2O$, $(NH_4)_2Fe(SO_4)_2.6H_2O$, $Ni(NO_3)_2.6H_2O$ et $MoO_3$.

**27.** Procédé conforme à la revendication 26, dans lequel ledit sel inorganique de métal est $CuSO_4.5H_2O$.

**28.** Procédé conforme à l'une des revendications précédentes, dans lequel ledit oxyde ou sel inorganique de métal se trouve présent en une proportion de 0,1 à 2 parties en poids de métal pour 100 parties en poids de polymère carboxylé.

**29.** Procédé conforme à la revendication 28, dans lequel ledit oxyde ou sel inorganique de métal se trouve présent en une proportion de 0,4 à 1 partie en poids de métal pour 100 parties en poids de polymère carboxylé.

**30.** Pneu pour roue de véhicule, comprenant un ou plusieurs composants en matériau élastomère réticulé, **caractérisé en ce qu'**au moins l'un de ces composants comprend, en tant que matériau élastomère réticulé, au moins un polymère élastomère comportant des groupes carboxyliques, réticulé par réaction avec au moins un composé organique époxydé, liquide à température ambiante, dont les molécules contiennent des groupes époxyde internes, chacun de ces groupes époxydes comportant un pont oxirane reliant

> i) deux atomes de carbone adjacents situés dans la chaîne principale, sous réserve que ni l'un ni l'autre de ces deux atomes de carbone adjacents ne soit un atome de carbone terminal de cette chaîne,
> ii) ou deux atomes de carbone adjacents situés dans une chaîne latérale, en présence d'au moins un oxyde ou un sel inorganique d'un métal choisi parmi le fer, le cuivre, l'étain, le molybdène et le nickel,

ledit polymère élastomère carboxylé étant réticulé pratiquement en l'absence d'agents supplémentaires de réticulation.

**31.** Pneu conforme à la revendication 30, dans lequel le matériau élastomère contient aussi une charge renforçante.

**32.** Pneu conforme à la revendication 31, dans lequel la charge renforçante se trouve présente en une proportion de 20 à 120 pcpr.

**33.** Pneu conforme à la revendication 32, dans lequel la charge renforçante se trouve présente en une proportion de 40 à 90 pcpr.

**34.** Pneu conforme à l'une des revendications 30 à 33, dans lequel le composé organique époxydé est tel que défini dans l'une des revendications 7 à 15.

**35.** Pneu conforme à l'une des revendications 30 à 34, dans lequel le polymère élastomère comportant des groupes carboxyliques est tel que défini dans l'une des revendications 16 à 22.

**36.** Pneu conforme à l'une des revendications 30 à 32, dans lequel l'oxyde ou le sel inorganique de métal est tel que défini dans l'une des revendications 25 à 29.

**37.** Pneu pour véhicules, comprenant une structure de ceinture, disposée coaxialement autour d'une structure de carcasse, et une bande de roulement disposée coaxialement autour de la structure de ceinture et comportant une surface externe de roulement destinée à venir en contact avec le sol, **caractérisé en ce que** ladite bande de roulement contient au moins un polymère élastomère comportant des groupes carboxyliques, réticulé par réaction avec au moins un composé organique époxydé, liquide à température ambiante, dont les molécules contiennent des groupes époxyde internes, chacun de ces groupes époxydes comportant un pont oxirane reliant

> i) deux atomes de carbone adjacents situés dans la chaîne principale, sous réserve que ni l'un ni l'autre de ces deux atomes de carbone adjacents ne soit un atome de carbone terminal de cette chaîne,
> ii) ou deux atomes de carbone adjacents situés dans une chaîne latérale, en présence d'au moins un oxyde ou un sel inorganique d'un métal choisi parmi le fer, le cuivre, l'étain, le molybdène et le nickel, ledit polymère élastomère carboxylé étant réticulé pratiquement en l'absence d'agents supplémentaires de réticulation.

**38.** Pneu conforme à la revendication 37, dans lequel le matériau élastomère contient aussi une charge renforçante.

**39.** Pneu conforme à la revendication 38, dans lequel la charge renforçante se trouve présente en une proportion de 20 à 120 pcpr.

**40.** Pneu conforme à la revendication 39, dans lequel la charge renforçante se trouve présente en une proportion de 40 à 90 pcpr.

**41.** Pneu conforme à l'une des revendications 37 à 40, dans lequel le composé organique époxydé est tel que défini dans l'une des revendications 7 à 15.

**42.** Pneu conforme à l'une des revendications 37 à 41, dans lequel le polymère élastomère comportant des groupes carboxyliques est tel que défini dans l'une des revendications 16 à 22.

**43.** Pneu conforme à l'une des revendications 37 à 42, dans lequel l'oxyde ou le sel inorganique de métal est tel que défini dans l'une des revendications 25 à 29.

**44.** Composition élastomère réticulable comprenant :

a) au moins un polymère élastomère comportant des groupes carboxyliques,
b) au moins un composé organique époxydé, liquide à température ambiante, dont les molécules contiennent des groupes époxyde internes, chacun de ces groupes époxydes comportant un pont oxirane reliant

i) deux atomes de carbone adjacents situés dans la chaîne principale, sous réserve que ni l'un ni l'autre de ces deux atomes de carbone adjacents ne soit un atome de carbone terminal de cette chaîne,
ii) ou deux atomes de carbone adjacents situés dans une chaîne latérale,

c) et au moins un oxyde ou un sel inorganique d'un métal choisi parmi le fer, le cuivre, l'étain, le molybdène et le nickel,

ladite étape de réticulation étant réalisée pratiquement en l'absence d'agents supplémentaires de réticulation.

**45.** Composition élastomère réticulable conforme à la revendication 44, qui contient aussi une charge renforçante.

**46.** Composition conforme à la revendication 45, dans laquelle la charge renforçante se trouve présente en une proportion de 20 à 120 pcpr (parties pour cent parties de résine).

**47.** Composition conforme à la revendication 46, dans laquelle la charge renforçante se trouve présente en une proportion de 40 à 90 pcpr.

**48.** Composition conforme à l'une des revendications 44 à 47, dans laquelle le composé organique époxydé présente un poids d'équivalent époxyde qui vaut de 40 à 2 000.

**49.** Composition conforme à la revendication 48, dans laquelle le composé organique époxydé présente un poids d'équivalent époxyde qui vaut de 50 à 1 500.

**50.** Composition conforme à la revendication 49, dans laquelle le composé organique époxydé présente un poids d'équivalent époxyde qui vaut de 100 à 1 000.

**51.** Composition conforme à l'une des revendications 44 à 50, dans laquelle le composé organique époxydé comprend une huile époxydée.

**52.** Composition conforme à la revendication 51, dans laquelle l'huile époxydée présente une température de congélation inférieure à 23 °C.

**53.** Composition conforme à l'une des revendications 44 à 50, dans laquelle le composé organique époxydé comprend un oligomère de diène époxydé.

**54.** Composition conforme à la revendication 53, dans laquelle l'oligomère de diène époxydé présente une masse molaire moyenne de 500 à 10 000.

**55.** Composition conforme à la revendication 54, dans laquelle l'oligomère de diène époxydé présente une masse molaire moyenne de 1 000 à 8 000.

**56.** Composition conforme à l'une des revendications 53 à 55, dans laquelle l'oligomère de diène époxydé est un oligomère époxydé de 1,3-butadiène ou d'isoprène, ou d'un mélange de ceux-ci.

**57.** Composition conforme à l'une des revendications 44 à 56, dans laquelle le polymère élastomère comportant des groupes carboxyliques est un homopolymère ou un copolymère qui contient au moins 0,1 % en moles de groupes carboxyliques, par rapport au nombre total de moles de monomères constituant le polymère.

**58.** Composition conforme à la revendication 57, dans laquelle le polymère élastomère carboxylé contient de 1 à 30 % en moles de groupes carboxyliques.

**59.** Composition conforme à la revendication 57 ou 58, dans laquelle le polymère élastomère carboxylé présente une masse molaire moyenne de 2 000 à 1 000 000.

**60.** Composition conforme à la revendication 59, dans laquelle le polymère élastomère carboxylé présente une masse molaire moyenne de 50 000 à 500000.

**61.** Composition conforme à l'une des revendications 44 à 60, dans laquelle le polymère élastomère carboxylé est obtenu par (co)polymérisation d'un ou de plusieurs monomères diènes conjugués, éventuellement mélangés avec des monovinyl-arènes et/ou des comonomères polaires, lesquels comonomères polaires sont choisis parmi la vinyl-pyridine, la vinyl-quinoléine, les esters d'acide acrylique ou d'acide alkyl-acrylique, et les nitriles, ainsi que leurs mélanges, et carboxylation ultérieure.

**62.** Composition conforme à l'une des revendications 44 à 60, dans laquelle le polymère élastomère carboxylé est obtenu par copolymérisation d'un diène conjugué, éventuellement mélangé avec des monovinyl-arènes et/ou des comonomères polaires, lesquels comonomères polaires sont choisis parmi la vinyl-pyridine, la vinyl-quinoléine, les esters d'acide acrylique ou d'acide alkyl-acrylique, et les nitriles, ainsi que leurs mélanges, et d'un monomère oléfinique comportant un ou plusieurs groupes carboxyle ou dérivés de tels groupes.

**63.** Composition conforme à l'une des revendications 44 à 60, dans laquelle le polymère élastomère carboxylé est obtenu par copolymérisation d'une ou de plusieurs monooléfines et d'un comonomère oléfinique comportant un ou plusieurs groupes carboxyle ou dérivés de tels groupes.

**64.** Composition conforme à l'une des revendications 44 à 63, dans laquelle le composé époxydé liquide se trouve présent en une proportion de 5 à 200 parties en poids pour 100 parties en poids de polymère élastomère.

**65.** Composition conforme à la revendication 64, dans laquelle le composé époxydé liquide se trouve présent en une proportion de 10 à 120 parties en poids pour 100 parties en poids de polymère élastomère.

**66.** Composition conforme à l'une des revendications 44 à 65, dans laquelle l'oxyde ou le sel inorganique de métal est tel que défini dans l'une des revendications 25 à 29.

**67.** Produit élastomère réticulé, obtenu par réticulation d'une composition conforme à l'une des revendications 44 à 66.

FIG. 1